# EUROPEAN PATENT APPLICATION

(11) **EP 4 749 772 A1**
(43) Date of publication of application: **27.05.2026**
(21) Application number: 25833300.4
(22) Date of filing: 26.06.2025
(51) Int. Cl.: H01M 10/6551, H01M 10/6556, H01M 10/613, H01M 50/367, H01M 50/317

(54) **BATTERY PACK**

(30) Priority: 04.07.2024 KR 20240088217
(71) Applicant: LG Energy Solution, Ltd., Seoul 07335 (KR)
(72) Inventor: JANG, Jun Ho, Daejeon 34122 (KR); HAN, Nyeon Gu, Daejeon 34122 (KR)
(74) Representative: Plasseraud IP
(86) International application number: PCT/KR2025/008993
(87) International publication number: WO 2026/010241

(57) **Abstract**

The technical idea of the present disclosure includes a pack housing and a cell assembly disposed in the pack housing, and the cell assembly includes a plurality of battery cells and a heat transfer structure including a top plate on the plurality of battery cells and a plurality of side plates in contact with the plurality of battery cells, and the plurality of side plates is each fitting-engaged with the top plate.

## Description

### [Technical Field]

The present disclosure relates to a battery pack.

This application claims the benefit of priority from Korean Patent Application No. 10-2024-0088217, filed on July 04, 2024, the entire contents disclosed therein are incorporated by reference into this disclosure.

### [Background]

Unlike primary batteries, secondary batteries can be charged and discharged multiple times. Secondary batteries are widely used as energy sources for various mobile devices such as handsets, laptops, and cordless vacuum cleaners. Recently, due to improvements in energy density and economies of scale, the manufacturing cost per unit capacity of secondary batteries has dramatically decreased, and the cruising distance of BEVs (battery electric vehicles) has increased to a level equivalent to that of fuel vehicles, so the main use of secondary batteries is shifting from mobile devices to mobility.

As secondary batteries are used in mobility, the demand for safety of secondary batteries is increasing. In the case of an accident such as a fire occurs in a secondary battery used in mobility, it may endanger the life of the driver, so research on technology to improve the safety of secondary batteries is essential.

### [Summary]

### [Technical Problem]

The technical problem to be solved by the present disclosure is to provide a battery pack.

### [Technical Solution]

To solve the above-mentioned problem, the technical concept of the present disclosure includes a pack housing and a cell assembly disposed in the pack housing, wherein the cell assembly includes a plurality of battery cells and a heat transfer structure including a top plate on the plurality of battery cells and a plurality of side plates in contact with the plurality of battery cells, and wherein the plurality of side plates are each fitting-engaged with the top plate.

In exemplary embodiments, the top plate includes a plurality of insertion holes, and the plurality of side plates each include a protrusion inserted into a corresponding insertion hole among the plurality of insertion holes of the top plate.

In exemplary embodiments, the top plate includes a plurality of unit plates separated from each other, and the plurality of unit plates are each coupled to at least one corresponding side plate among the plurality of side plates.

In exemplary embodiments, the plurality of battery cells is arranged in a first direction, the plurality of side plates is spaced apart from each other in the first direction, and the plurality of unit plates of the top plate are arranged in the first direction.

In exemplary embodiments, the pack housing includes a base frame supporting the cell assembly, and the base frame is attached to the plurality of battery cells by a first thermally conductive adhesive layer.

In exemplary embodiments, the base frame includes a first cooling channel through which a cooling fluid flows.

In exemplary embodiments, the pack housing further includes an upper cooling structure disposed on the cell assembly, and the upper cooling structure is attached to the top plate of the heat transfer structure by a second thermally conductive adhesive layer.

In exemplary embodiments, the upper cooling structure includes a second cooling channel through which a cooling fluid flows.

In exemplary embodiments, the heat transfer structure further includes a plurality of cell accommodation spaces separated from each other in a first direction and each extending in a second direction perpendicular to the first direction, and a plurality of venting channels separated from each other in the first direction and each extending in the second direction, wherein the plurality of cell accommodation spaces each accommodate a corresponding battery cell among the plurality of battery cells, and the plurality of venting channels is each positioned above a corresponding cell accommodation space among the plurality of cell accommodation spaces and is configured to guide gas in the second direction.

In exemplary embodiments, the plurality of venting channels each extend in the second direction from a first end to a second end, the cell assembly includes a blocking plate that closes the first end of each of the plurality of venting channels, and in each of the plurality of venting channels, gas flows in a direction from the first end of each of the plurality of venting channels toward the second end of each of the plurality of venting channels.

In exemplary embodiments, the blocking plate is a portion of the top plate of the heat transfer structure.

In exemplary embodiments, the pack housing includes a first side wall and a second side wall spaced apart in the second direction, and a third side wall and a fourth side wall spaced apart in the first direction, wherein the second end of each of the plurality of venting channels faces the first side wall, and a venting device is mounted on the third side wall of the pack housing.

In exemplary embodiments, the plurality of battery cells are arranged in a first direction, the pack housing further includes a base frame supporting the cell assembly and a support structure extending in a second direction perpendicular to the first direction on the base frame, and the cell assembly further includes a fastening frame attached to a battery cell positioned outermost in the first direction among the plurality of battery cells and fastened to the support structure.

### [Advantageous Effects]

According to exemplary embodiments of the present disclosure, the battery pack has a dual cooling structure that cools the battery cells through a base frame provided on a lower side of the cell assembly and an upper cooling structure provided on an upper side of the cell assembly, thereby improving the cooling performance for the battery cells.

According to exemplary embodiments of the present disclosure, the heat transfer structure configured to thermally couple the battery cells to the upper cooling structure can be manufactured relatively easily through fitting engagement between the top plate and the side plates, thereby reducing the manufacturing difficulty of the heat transfer structure.

According to exemplary embodiments of the present disclosure, since high-temperature gas generated from the plurality of battery cells is discharged along one venting direction provided by the heat transfer structure, directional venting that discharges venting gas in a predetermined specific direction can be implemented.

The technical effects that can be obtained in exemplary embodiments of the present disclosure are not limited to the above-described effects, and other effects not mentioned can be clearly derived and understood by a person skilled in the art from the following description. In other words, unintended effects of implementing the exemplary embodiments of the present disclosure may also be derived from the exemplary embodiments of the present disclosure by a person skilled in the art.

### [Brief Description of the Drawings]

FIG. 1 is a perspective view illustrating a cell assembly according to exemplary embodiments of the present disclosure.
FIG. 2 is a cross-sectional view illustrating a battery pack including a cell assembly according to exemplary embodiments of the present disclosure.
FIG. 3 is a cross-sectional view illustrating a heat transfer structure and a fastening frame of the cell assembly according to exemplary embodiments of the present disclosure.
FIG. 4 is a perspective view illustrating an assembly process of a unit structure of the heat transfer structure according to exemplary embodiments of the present disclosure.
FIG. 5 is a perspective view illustrating a unit structure of the heat transfer structure according to exemplary embodiments of the present disclosure.
FIG. 6 is a cross-sectional view illustrating a battery pack including a cell assembly according to exemplary embodiments of the present disclosure.
FIG. 7 is a perspective view illustrating a unit structure of the heat transfer structure according to exemplary embodiments of the present disclosure.
FIG. 8 is a perspective view illustrating a battery pack according to exemplary embodiments of the present disclosure.
FIG. 9 is a perspective view illustrating a portion of the battery pack according to exemplary embodiments of the present disclosure.
FIG. 10 is a cross-sectional view of the battery pack taken along line CC-CC' of FIG. 8.

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so that various equivalents and modifications that may replace them may exist at the time of filing the present application.

In addition, in describing the present disclosure, when it is determined that a detailed description of a related known configuration or function may obscure the gist of the present disclosure, the detailed description thereof will be omitted.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component does not entirely reflect the actual size or ratio.

### (first embodiment)

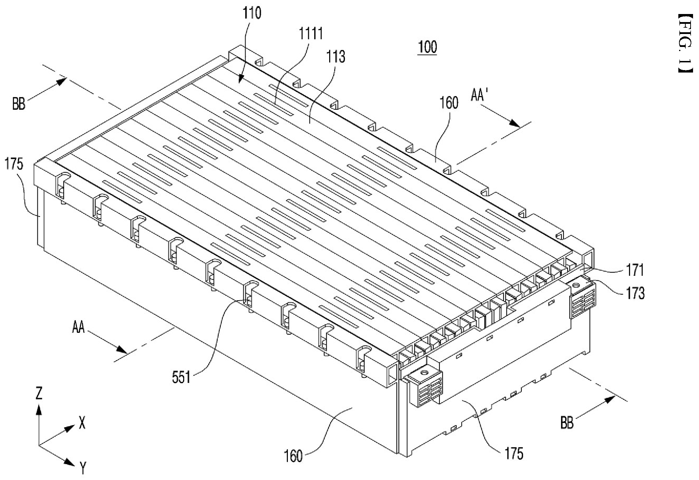

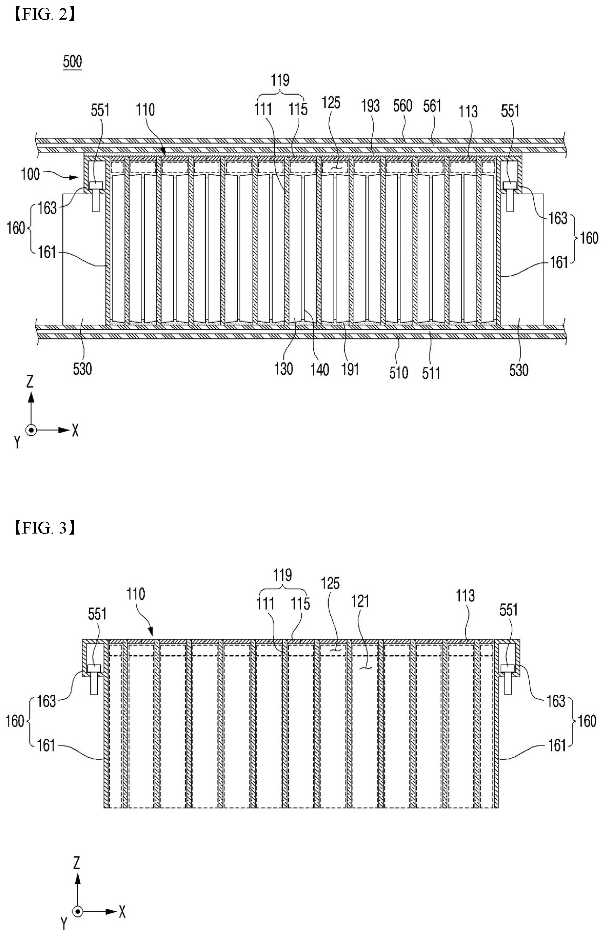

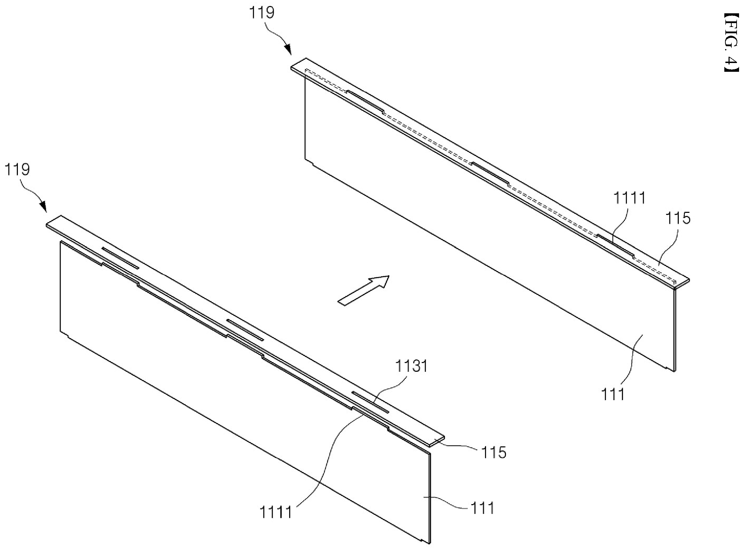

FIG. 1 is a perspective view illustrating a cell assembly 100 according to exemplary embodiments of the present disclosure. FIG. 2 is a cross-sectional view illustrating a battery pack 500 including the cell assembly 100 according to exemplary embodiments of the present disclosure. In FIG. 2, a cross-section of the cell assembly 100 taken along line AA-AA' of FIG. 1 is shown. FIG. 3 is a cross-sectional view illustrating a heat transfer structure 110 and a fastening frame 160 of the cell assembly 100 according to exemplary embodiments of the present disclosure. In FIG. 3, a cross-section of the heat transfer structure 110 and a cross-section of the fastening frame 160 taken along line AA-AA' of FIG. 1 are shown. FIG. 4 is a perspective view illustrating an assembly process of a unit structure 119 of the heat transfer structure 110 according to exemplary embodiments of the present disclosure.

Referring to FIGS. 1 to 4, the cell assembly 100 may include a heat transfer structure 110, a plurality of battery cells 130, and a fastening frame 160.

The heat transfer structure 110 may be connected to the plurality of battery cells 130 and may be configured to transfer heat from the plurality of battery cells 130 to a cooling structure such as a heat sink. The heat transfer structure 110 may include a plurality of side plates 111 spaced apart from each other in a first horizontal direction (e.g., X-direction), and a top plate 113 disposed on the plurality of side plates 111. Each of the side plates 111 may have a plate shape extending in a second horizontal direction (e.g., Y-direction) and a vertical direction (e.g., Z-direction). The top plate 113 may be connected to an upper end of each of the plurality of side plates 111. The top plate 113 may have a plate shape extending in the first horizontal direction (e.g., X-direction) and the second horizontal direction (e.g., Y-direction).

The heat transfer structure 110 may include a material having excellent thermal conductivity. For example, the heat transfer structure 110 may include aluminum, copper, silver, gold, iron, tungsten, or a combination thereof.

The heat transfer structure 110 may provide a plurality of cell accommodation spaces 121 separated from each other. The plurality of cell accommodation spaces 121 may each accommodate one or more battery cells 130. The plurality of cell accommodation spaces 121 may be separated from each other in the first horizontal direction (e.g., X-direction), and the plurality of cell accommodation spaces 121 may each extend in the second horizontal direction (e.g., Y-direction). Adjacent cell accommodation spaces 121 among the plurality of cell accommodation spaces 121 may be separated by a corresponding side plate 111 among the plurality of side plates 111.

The heat transfer structure 110 may provide a plurality of venting channels 125 separated from each other. The plurality of venting channels 125 may be separated from each other in the first horizontal direction (e.g., X-direction). Adjacent venting channels 125 among the plurality of venting channels 125 may be separated by a corresponding side plate 111 among the plurality of side plates 111. Each venting channel 125 may extend in the second horizontal direction (e.g., Y-direction). Each venting channel 125 may be provided above a corresponding cell accommodation space 121 among the plurality of cell accommodation spaces 121 and may communicate with the corresponding cell accommodation space 121. Each venting channel 125 may be defined by two adjacent side plates 111, the top plate 113, and an upper surface of one or more battery cells 130 accommodated in the corresponding cell accommodation space 121. That is, each venting channel 125 may be provided between the top plate 113 and the one or more battery cells 130 accommodated in the cell accommodation space 121 in the vertical direction (e.g., Z-direction), and may be provided between two side plates 111 adjacent in the first horizontal direction (e.g., X-direction).

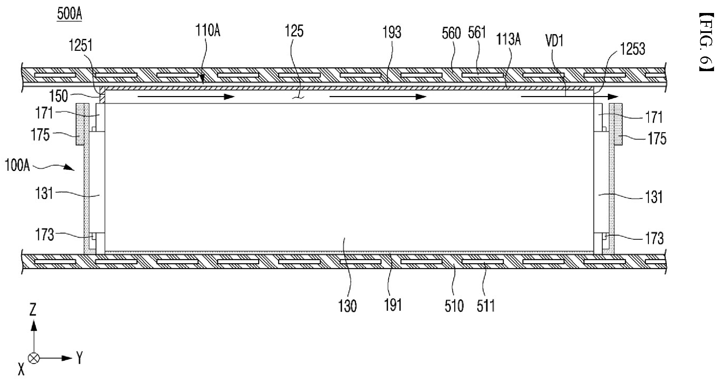

Each venting channel 125 may be configured to guide or transfer high-temperature gas generated from one or more battery cells 130 accommodated in the corresponding cell accommodation space 121 in the second horizontal direction (e.g., Y-direction). The top plate 113 may cover the plurality of venting channels 125 and the plurality of battery cells 130 so that gas flow in the vertical direction (e.g., Z-direction) between each venting channel 125 and a space above the cell assembly 100 is blocked. In each venting channel 125, high-temperature gas may flow in the second horizontal direction (e.g., Y-direction) along a lower surface of the top plate 113 facing the plurality of battery cells 130. Each venting channel 125 extends in the second horizontal direction (e.g., Y-direction) and may have a first end (1251 in FIG. 6) and a second end (1253 in FIG. 6) opposite to each other in the second horizontal direction (e.g., Y-direction). At least one of the first end 1251 and the second end 1253 of each venting channel 125 is exposed to an external space outside the cell assembly 100, and gas flow between the external space of the cell assembly 100 and each venting channel 125 may be allowed.

The plurality of side plates 111 may each be fitting-engaged with the top plate 113. In exemplary embodiments, the plurality of side plates 111 may each include a protrusion 1111 provided at an upper portion thereof, and the top plate 113 may include a plurality of insertion holes 1131. Each side plate 111 may be coupled to the top plate 113 by inserting the protrusion 1111 of each side plate 111 into a corresponding insertion hole 1131 of the top plate 113. For example, the insertion hole 1131 of the top plate 113 may have a slit shape extending in the second horizontal direction (e.g., Y-direction), and the protrusion 1111 of each side plate 111 may extend in the second horizontal direction (e.g., Y-direction) along the insertion hole 1131 of the top plate 113.

In exemplary embodiments, the top plate 113 may include a plurality of unit plates 115. The plurality of unit plates 115 may be arranged in the first horizontal direction (e.g., X-direction), and neighboring unit plates 115 may contact each other. When viewed in a plan view, the plurality of unit plates 115 may each have a rectangular shape, and the top plate 113, which is an assembly of the plurality of unit plates 115, may have a rectangular shape. The plurality of unit plates 115 of the top plate 113 may each include an insertion hole 1131 and may be fitting-engaged with at least one side plate 111.

The heat transfer structure 110 may include a plurality of unit structures 119. The plurality of unit structures 119 may be arranged in the first horizontal direction (e.g., X-direction), and the heat transfer structure 110 may be understood as an assembly of the plurality of unit structures 119. Each unit structure 119 may include a single unit plate 115 and at least one side plate 111 coupled to the single unit plate 115. In exemplary embodiments, each unit structure 119 may include a single unit plate 115 and a single side plate 111, and may have a T-shaped cross-section. To manufacture each unit structure 119, a step of manufacturing each of the unit plate 115 and the side plate 111 and a step of assembling the unit plate 115 and the side plate 111 may be performed sequentially. The unit plate 115 and the side plate 111 may each be manufactured by a press process using a press mold. Assembly between the unit plate 115 and the side plate 111 may include fitting-engaging the protrusion 1111 of the side plate 111 into the insertion hole 1131 of the unit plate 115.

The plurality of battery cells 130 may be accommodated in the plurality of cell accommodation spaces 121 of the heat transfer structure 110 and may be arranged in the first horizontal direction (e.g., X-direction). Battery cells 130 accommodated in different cell accommodation spaces 121 of the heat transfer structure 110 may be separated by the side plate 111. Each battery cell 130 may be attached to a corresponding side plate 111 among the plurality of side plates 111 by an adhesive member. The adhesive member may include, for example, an adhesive tape or a resin layer.

In exemplary embodiments, at least one of the plurality of cell accommodation spaces 121 of the heat transfer structure 110 may accommodate one or more battery cells 130 arranged in the first horizontal direction (e.g., X-direction), for example, two battery cells 130.

In exemplary embodiments, at least one of the plurality of cell accommodation spaces 121 of the heat transfer structure 110 may include a pad 140 and two battery cells 130 spaced apart with the pad 140 interposed therebetween. The pad 140 may be attached to each of the two battery cells 130 by an adhesive member made of an adhesive tape or a resin layer. The pad 140 may correspond to a thermal barrier pad configured to thermally separate and support the two battery cells 130 in the first horizontal direction (e.g., X-direction). For example, the pad 140 may include polyurethane, silicone, or a combination thereof.

The battery cell 130 is accommodated in the cell accommodation space 121 of the heat transfer structure 110 and may extend in the second horizontal direction (e.g., Y-direction) within the cell accommodation space 121. At least one of both ends of the battery cell 130 in the second horizontal direction (e.g., Y-direction) may be provided with an electrode lead (131 in FIG. 6). When the battery cell 130 is accommodated in the cell accommodation space 121 of the heat transfer structure 110, both side surfaces of the battery cell 130 may be covered by two side plates 111 adjacent in the first horizontal direction (e.g., X-direction), and an upper surface of the battery cell 130 may be covered by the top plate 113. In exemplary embodiments, a lower surface of the battery cell 130 may not be covered by the heat transfer structure 110 and may be exposed to the outside of the heat transfer structure 110.

Each battery cell 130 is a basic unit of a lithium-ion battery, that is, a secondary battery. Each battery cell 130 may include an electrode assembly, an electrolyte, and a cell case. The electrode assembly built into the cell case may include a positive electrode, a negative electrode, and a separator interposed between the positive electrode and the negative electrode. The electrode assembly may be either a jelly-roll type or a stack type depending on the assembly form. A jelly-roll type electrode assembly may include a wound structure of a positive electrode, a negative electrode, and a separator interposed therebetween. A stack type electrode assembly may include a plurality of positive electrodes, a plurality of negative electrodes sequentially stacked, and a plurality of separators interposed therebetween. The positive electrode may include a positive electrode current collector and a positive electrode active material. The negative electrode may include a negative electrode current collector and a negative electrode active material.

The plurality of battery cells 130 may be connected in series and/or in parallel. In one example, the plurality of battery cells 130 may be connected to each other in series. In one example, the plurality of battery cells 130 may be connected to each other in parallel. In one example, when a set of two or more battery cells 130 connected in parallel is defined as a bank, one bank composed of two or more battery cells 130 connected in parallel and another bank composed of two or more battery cells 130 connected in parallel may be connected in series.

Each battery cell 130 may correspond to a pouch-type battery cell, a cylindrical battery cell, or a prismatic battery cell. An electrode assembly of a pouch-type battery cell is built into a pouch case including an aluminum laminate sheet. An electrode assembly of a cylindrical battery cell is built into a cylindrical metal can. An electrode assembly of a prismatic battery cell is built into a prismatic metal can. In exemplary embodiments, each battery cell 130 may correspond to a pouch-type battery cell, and a length of each battery cell 130 in the second horizontal direction (e.g., Y-direction) may be greater than a length of each battery cell 130 in the first horizontal direction (e.g., X-direction) and a length in the vertical direction (e.g., Z-direction).

The plurality of battery cells 130 may be arranged in the first horizontal direction (e.g., X-direction) to constitute a cell block. When viewed in a plan view, the cell block may have a rectangular shape. The cell block may have two side surfaces opposite to each other in the first horizontal direction (e.g., X-direction) (i.e., a first side surface and a second side surface), a front surface and a rear surface opposite to each other in the second horizontal direction (e.g., Y-direction), and an upper surface and a lower surface opposite to each other in the vertical direction (e.g., Z-direction).

A busbar frame 171 supporting electrode leads 131 of the plurality of battery cells 130 may be disposed on each of the front surface and the rear surface of the cell block. Slits into which the electrode leads 131 are inserted may be provided in the busbar frame 171 on the front surface of the cell block, and slits into which the electrode leads 131 are inserted may be provided in the busbar frame 171 on the rear surface of the cell block.

The busbar frame 171 may support busbars 173. The busbars 173 may be electrically and physically connected to at least one of the electrode leads 131 of the plurality of battery cells 130. The busbar 173 may be coupled to at least one of the electrode leads 131 of the plurality of battery cells 130 by welding. The busbar 173 may include a terminal-busbar for electrically connecting the cell block of the cell assembly 100 to a cell block of another cell assembly or an external device. In exemplary embodiments, the busbars 173 may include an inter-busbar connected to electrode leads 131 of different battery cells 130 to electrically connect different battery cells 130.

The cell assembly 100 may further include insulating covers 175 connected to the busbar frames 171. One insulating cover 175 may cover the busbar frame 171 on the front surface of the cell block, and may cover the electrode leads 131 and the busbars 173 supported by the busbar frame 171 on the front surface of the cell block. Another insulating cover 175 may cover the busbar frame 171 on the rear surface of the cell block, and may cover the electrode leads 131 and the busbars 173 supported by the busbar frame 171 on the rear surface of the cell block.

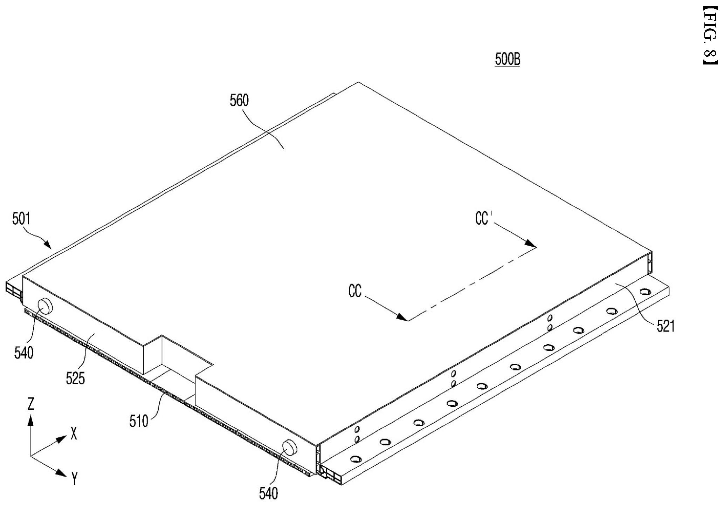

The fastening frame 160 may each be attached to each of the battery cells 130 positioned outermost in the first horizontal direction (e.g., X-direction) among the plurality of battery cells 130. The fastening frame 160 may be fastened to an external support structure 530. For example, the support structure 530 is provided in a pack housing (501 in FIG. 8) of the battery pack 500 on which the cell assembly 100 is mounted, and the cell assembly 100 may be mounted on the pack housing 501 through coupling between the fastening frame 160 and the support structure 530.

The fastening frame 160 may cover one side surface of the battery cell 130 and may be attached to one side surface of the battery cell 130 by an adhesive member composed of an adhesive tape or a resin layer. The fastening frame 160 may be fastened to the external support structure 530 by a bolt 551. For example, the fastening frame 160 may include a fixing plate 161 attached to the battery cell 130, and a flange 163 fastened to the external support structure 530 by the bolt 551. The flange 163 may be connected to an upper portion of the fixing plate 161 and may be seated on the external support structure 530.

The battery pack 500 may include the cell assembly 100, a base frame 510 supporting the cell assembly 100, and an upper cooling structure 560 on the cell assembly 100. The base frame 510 and the upper cooling structure 560 may be a portion of the pack housing 501.

The base frame 510 may be provided below the cell assembly 100 and may support the plurality of battery cells 130. A first thermally conductive adhesive layer 191 may be disposed between each of the plurality of battery cells 130 and the base frame 510. The first thermally conductive adhesive layer 191 may attach each of the plurality of battery cells 130 to the base frame 510. An upper portion of the first thermally conductive adhesive layer 191 may be in direct contact with each of the plurality of battery cells 130, and a lower portion of the first thermally conductive adhesive layer 191 may be in direct contact with the base frame 510. The first thermally conductive adhesive layer 191 may thermally and physically couple each of the plurality of battery cells 130 to the base frame 510. The first thermally conductive adhesive layer 191 may include a thermal resin and/or a thermal interface material (TIM).

The base frame 510 may include a first cooling channel 511 configured to allow a cooling fluid to flow. The first cooling channel 511 of the base frame 510 may extend in the first horizontal direction (e.g., X-direction) within the base frame 510. A cooling fluid provided from outside the base frame 510 may be supplied to an inlet of the first cooling channel 511, flow along the first cooling channel 511, and be discharged to the outside through an outlet of the first cooling channel 511. While the cooling fluid flows along the first cooling channel 511, cooling of the cell assembly 100 may be performed. The cooling fluid may include a coolant and/or a refrigerant. In the present disclosure, the base frame 510 may be referred to as a lower cooling structure.

The upper cooling structure 560 may be disposed on the top plate 113 of the heat transfer structure 110, and a second thermally conductive adhesive layer 193 may be disposed between the upper cooling structure 560 and the top plate 113 of the heat transfer structure 110. The second thermally conductive adhesive layer 193 may attach the upper cooling structure 560 to the top plate 113 of the heat transfer structure 110. An upper portion of the second thermally conductive adhesive layer 193 may be in direct contact with the upper cooling structure 560, and a lower portion of the second thermally conductive adhesive layer 193 may be in direct contact with the top plate 113 of the heat transfer structure 110. The second thermally conductive adhesive layer 193 may thermally and physically couple the upper cooling structure 560 to the heat transfer structure 110. Since the plurality of battery cells 130 are thermally coupled to the upper cooling structure 560 through the heat transfer structure 110 and the second thermally conductive adhesive layer 193, heat generated from the plurality of battery cells 130 may be transferred to the upper cooling structure 560 through the heat transfer structure 110 and the second thermally conductive adhesive layer 193. The second thermally conductive adhesive layer 193 may include a thermal resin and/or TIM. Since the second thermally conductive adhesive layer 193 is disposed on the top plate 113 of the heat transfer structure 110, the plurality of battery cells 130 may be spaced apart from the second thermally conductive adhesive layer 193 by the heat transfer structure 110.

The upper cooling structure 560 may include a second cooling channel 561 configured to allow a cooling fluid to flow. The second cooling channel 561 of the upper cooling structure 560 may extend in the first horizontal direction (e.g., X-direction) within the upper cooling structure 560. A cooling fluid provided from outside the upper cooling structure 560 may be supplied to an inlet of the second cooling channel 561, flow along the second cooling channel 561, and be discharged to the outside through an outlet of the second cooling channel 561. While the cooling fluid flows along the second cooling channel 561, cooling of the cell assembly 100 may be performed. The cooling fluid may include a coolant and/or a refrigerant.

According to exemplary embodiments of the present disclosure, the battery pack 500 has a dual cooling structure that cools the battery cells 130 through the base frame 510 provided on the lower side of the cell assembly 100 and the upper cooling structure 560 provided on the upper side of the cell assembly 100, thereby improving cooling performance for the battery cells 130.

According to exemplary embodiments of the present disclosure, the heat transfer structure 110 configured to thermally couple the battery cells 130 to the upper cooling structure 560 can be easily manufactured through fitting engagement between the top plate 113 and the side plate 111, thereby reducing the manufacturing difficulty of the heat transfer structure 110.

According to exemplary embodiments of the present disclosure, when disassembling the battery pack 500 for rework operation, the battery cells 130 are covered and protected by the heat transfer structure 110 without being in direct contact with an adhesive such as TIM or thermal resin, thereby preventing the battery cells 130 from being damaged during the rework operation.

According to exemplary embodiments of the present disclosure, the cell assembly 100 may have a cell-to-pack structure that is directly assembled to the pack housing 501 of the battery pack 500. Since the battery cells 130 of the cell assembly 100 are not covered by a structure such as a module frame and can be thermally coupled to cooling structures that cool the battery cells 130, cooling efficiency for the plurality of battery cells 130 can be improved. In addition, since the cell assembly 100 includes the fastening frame 160 configured to be fastened to the pack housing 501 of the battery pack 500, an assembly gap between the cell assembly 100 and the pack housing 501 can be removed, thereby improving the energy density of the battery pack 500.

### (second embodiment)

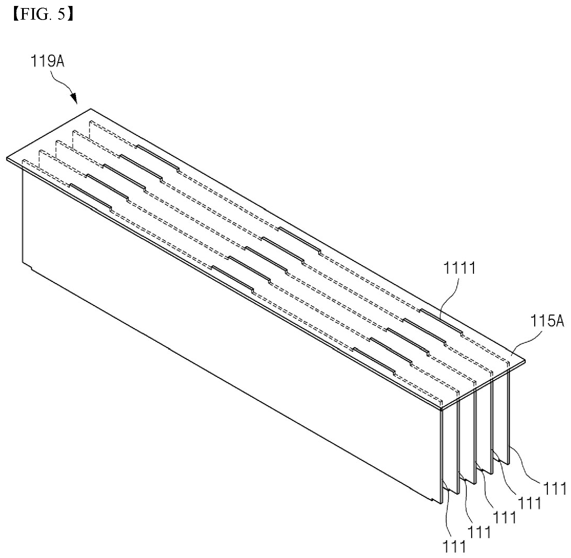

FIG. 5 is a perspective view illustrating a unit structure 119A of the heat transfer structure 110 according to exemplary embodiments of the present disclosure.

Referring to FIG. 5 together with FIG. 3, in the heat transfer structure 110, each unit structure 119A may include a single unit plate 115A and a plurality of side plates 111 coupled to the single unit plate 115A. In FIG. 5, it is illustrated that five side plates 111 are coupled to the single unit plate 115A, but the present disclosure is not limited thereto, and the number of side plates 111 coupled to the single unit plate 115A may be two or more. In the heat transfer structure 110, the rigidity of each unit structure 119A can be adjusted by adjusting the number of side plates 111 coupled to the single unit plate 115A.

In some exemplary embodiments, the top plate 113 of the heat transfer structure 110 may be a single plate, and all side plates 111 of the heat transfer structure 110 may be coupled to the single plate.

### (third embodiment)

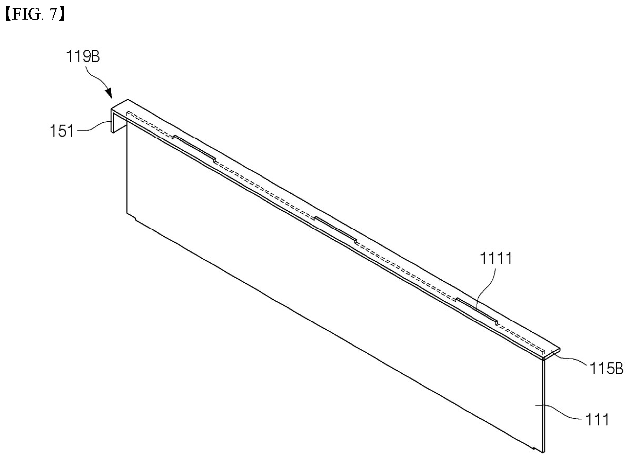

FIG. 6 is a cross-sectional view illustrating a battery pack 500A including a cell assembly 100A according to exemplary embodiments of the present disclosure. In FIG. 6, a cross-section of the cell assembly 100A taken along a line corresponding to line BB-BB' of FIG. 1 is shown. FIG. 7 is a perspective view illustrating a unit structure 119B of a heat transfer structure 110A according to exemplary embodiments of the present disclosure.

Referring to FIGS. 6 and 7, the cell assembly 100A may include a blocking plate 150 connected to an end of the heat transfer structure 110A in the second horizontal direction (e.g., Y-direction). The blocking plate 150 may close one end of each of the plurality of venting channels 125 of the heat transfer structure 110A so that gas is discharged in only one direction within the plurality of venting channels 125. For example, the blocking plate 150 may extend in the first horizontal direction (e.g., X-direction) to close one end of each of the plurality of venting channels 125.

The blocking plate 150 may close the first end 1251 of each venting channel 125 so that gas flow through the first end 1251 of each venting channel 125 provided in the heat transfer structure 110A is not allowed. Since the first end 1251 of each venting channel 125 is closed by the blocking plate 150, gas in each venting channel 125 may flow in one venting direction VD1 from the first end 1251 of each venting channel 125 toward the second end 1253 and may be discharged to the outside of the cell assembly 100A through the second end 1253 of each venting channel 125. The second end 1253 of each venting channel 125 may be an outlet of the venting channel 125 through which gas is discharged to the outside. When gas is generated in the battery cell 130, the gas generated in the battery cell 130 may flow in the one venting direction VD1 along the venting channel 125 above the battery cell 130, and then may be discharged to the outside of the cell assembly 100A through the second end 1253 of the venting channel 125.

In exemplary embodiments, the blocking plate 150 may be a portion of the top plate 113A of the heat transfer structure 110A. The top plate 113A may include a main plate to which the plurality of side plates 111 are coupled, and the blocking plate 150 extending along one edge of the main plate. For example, the top plate 113A having the main plate and the blocking plate 150 may be manufactured by bending a flat member. In exemplary embodiments, the top plate 113A is an assembly of a plurality of unit plates 115B, and each unit plate 115B may include a unit blocking plate 151. The blocking plate 150 may be an assembly of a plurality of unit blocking plates 151 of the plurality of unit plates 115B connected in the first horizontal direction (e.g., X-direction).

According to exemplary embodiments of the present disclosure, since high-temperature gas generated from the plurality of battery cells 130 is discharged along the one venting direction VD1 provided by the heat transfer structure 110A, directional venting that discharges venting gas in a predetermined specific direction can be implemented.

### (fourth embodiment)

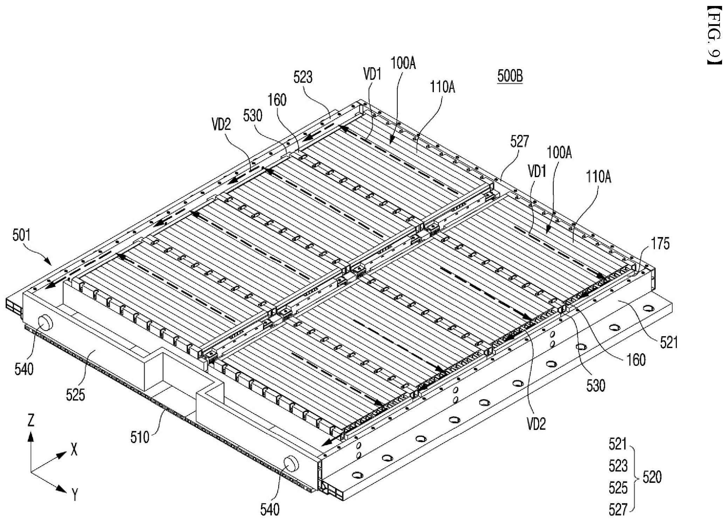

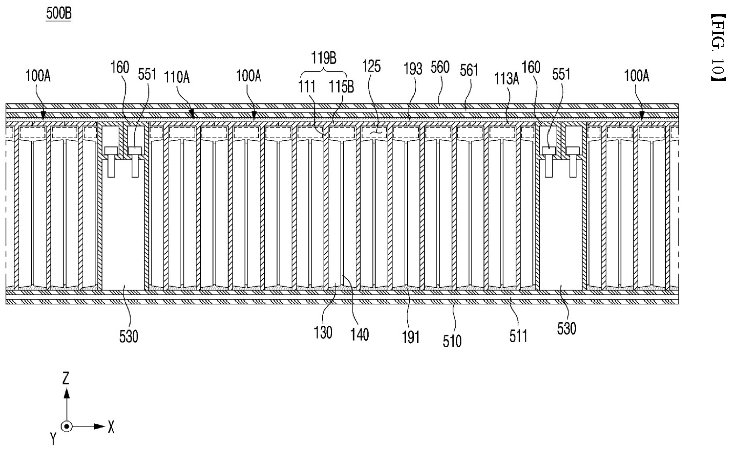

FIG. 8 is a perspective view illustrating a battery pack 500B according to exemplary embodiments of the present disclosure. FIG. 9 is a perspective view illustrating a portion of the battery pack 500B according to exemplary embodiments of the present disclosure. FIG. 10 is a cross-sectional view of the battery pack 500B taken along line CC-CC' of FIG. 8.

Referring to FIGS. 8 to 10 together with FIGS. 6 and 7, the battery pack 500B may include a pack housing 501 and a plurality of cell assemblies 100A mounted in the pack housing 501. In exemplary embodiments, the battery pack 500B may include a plurality of cell assemblies 100A arranged in the first horizontal direction (e.g., X-direction) and the second horizontal direction (e.g., Y-direction).

The pack housing 501 may provide an accommodation space in which the cell assembly 100A is accommodated. The pack housing 501 may include a base frame 510, a side frame 520, and an upper cooling structure 560. The side frame 520 may be coupled to an edge portion of the base frame 510 and may extend along a periphery of the side frame 520 to surround the plurality of cell assemblies 100A. The side frame 520 may be coupled to an edge portion of the base frame 510 and may extend along a periphery of the base frame 510 to surround the plurality of cell assemblies 100A. The upper cooling structure 560 may be coupled on the side frame 520 to cover the accommodation space of the pack housing 501. The accommodation space of the pack housing 501 may be a sealed space.

The base frame 510 may have a plate shape parallel to the first horizontal direction (e.g., X-direction) and the second horizontal direction (e.g., Y-direction). The base frame 510 may support the cell assembly 100A. The cell assembly 100A may be thermally coupled to the base frame 510 through the first thermally conductive adhesive layer 191 interposed between the cell assembly 100A and the base frame 510. In exemplary embodiments, lower surfaces of the plurality of battery cells 130 are not covered by the heat transfer structure 110A so as to be exposed to the outside of the heat transfer structure 110A, and lower surfaces of the plurality of battery cells 130 may be connected to the base frame 510 through the first thermally conductive adhesive layer 191.

The upper cooling structure 560 may be disposed on the plurality of cell assemblies 100A. The upper cooling structure 560 may have a plate shape parallel to the first horizontal direction (e.g., X-direction) and the second horizontal direction (e.g., Y-direction). Each cell assembly 100A may be coupled to the upper cooling structure 560 through the second thermally conductive adhesive layer 193 interposed between the heat transfer structure 110A and the upper cooling structure 560. Battery cells 130 of each cell assembly 100A may be thermally coupled to the upper cooling structure 560 through the heat transfer structure and the second thermally conductive adhesive layer 193. In exemplary embodiments, the upper cooling structure 560 may be a pack lid connected on the side frame 520 to cover the accommodation space of the pack housing 501. In other exemplary embodiments, the pack housing 501 may include a pack lid separate from the upper cooling structure 560, and the upper cooling structure 560 may be disposed between the pack lid and the cell assembly 100A.

The side frame 520 may include a first side wall 521 and a second side wall 523 facing and spaced apart in the second horizontal direction (e.g., Y-direction), and a third side wall 525 and a fourth side wall 527 facing and spaced apart in the first horizontal direction (e.g., X-direction). The side walls of the pack housing 501 may surround the accommodation space. The third side wall 525 of the pack housing 501 is a front wall constituting a front portion of the battery pack 500B, and the fourth side wall 527 of the pack housing 501 may be a rear wall constituting a rear portion of the battery pack 500B.

A venting device 540 may be mounted on the third side wall 525 of the pack housing 501. The venting device 540 may be mounted in an exhaust passage provided between the accommodation space of the pack housing 501 and an external space of the pack housing 501, and may be configured to selectively exhaust gas between the accommodation space of the pack housing 501 and the external space of the pack housing 501. In exemplary embodiments, the venting device 540 may include a check valve, a relief valve, a safety valve, and/or a rupture disc.

In exemplary embodiments, the venting device 540 may be a relief valve configured to selectively open and close the gas exhaust passage according to an internal pressure of the accommodation space of the pack housing 501. The relief valve may open the gas exhaust passage to discharge gas to the outside of the pack housing 501 when the internal pressure of the accommodation space of the pack housing 501 becomes higher than a reference pressure, and may close the gas exhaust passage when the internal pressure of the accommodation space of the pack housing 501 becomes lower than the reference pressure as gas is discharged.

The pack housing 501 may include a plurality of support structures 530 provided on the base frame 510. The plurality of support structures 530 are provided on an upper surface of the base frame 510 and may be spaced apart from each other in the first horizontal direction (e.g., X-direction). The plurality of support structures 530 may each extend in the second horizontal direction (e.g., Y-direction). The plurality of support structures 530 may each be referred to as a cross beam structure. The plurality of support structures 530 may separate or partition the accommodation space of the pack housing 501 into a plurality of sub-accommodation spaces. The plurality of sub-accommodation spaces are separated or partitioned in the first horizontal direction (e.g., X-direction), and one cell assembly 100A may be disposed in each sub-accommodation space.

The fastening frame 160 of each cell assembly 100A may be placed on a corresponding support structure 530 among the plurality of support structures 530. Each cell assembly 100A may be fastened to the pack housing 501 by the fastening frame 160 being fastened to the corresponding support structure 530 among the plurality of support structures 530 by the bolt 551. More specifically, each cell assembly 100A may be fastened to the pack housing 501 by a pair of fastening frames 160 being fastened to a corresponding pair of support structures 530 among the plurality of battery support structures 530.

In exemplary embodiments, two cell assemblies 100A adjacent in the first horizontal direction (e.g., X-direction) may share the same single support structure 530. That is, a single support structure 530 may be fastened to a fastening frame 160 of one of two adjacent cell assemblies 100A and a fastening frame 160 of the other one of the two adjacent cell assemblies 100A.

In exemplary embodiments, each cell assembly 100A may be configured to discharge gas in one venting direction VD1, and an outlet of the one venting direction VD1 of each cell assembly 100A may face one of the first side wall 521 and the second side wall 523. Each cell assembly 100A may be mounted on the pack housing 501 so that the second end 1253 of the venting channel 125 where the outlet of the venting channel 125 is provided directly faces one of the first side wall 521 and the second side wall 523. In this case, gas discharged from each cell assembly 100A may flow along the first side wall 521 or the second side wall 523 in a venting direction VD2 parallel to the first horizontal direction (e.g., X-direction) to reach the third side wall 525, and the gas guided to the third side wall 525 may be discharged to the outside of the battery pack 500B through the venting device 540 provided on the third side wall 525.

In exemplary embodiments, the battery pack 500B may include a plurality of cell assemblies 100A arranged in two rows. Cell assemblies 100A of a first row are arranged in the first horizontal direction (e.g., X-direction) and may be closer to the first side wall 521 than to the second side wall 523. Cell assemblies 100A of a second row are arranged in the first horizontal direction (e.g., X-direction) and may be closer to the second side wall 523 than to the first side wall 521. In this case, the cell assemblies 100A of the first row may each be disposed so that the outlet of the one venting direction VD1 faces the first side wall 521, and the cell assemblies 100A of the second row may each be disposed so that the outlet of the one venting direction VD1 faces the second side wall 523. Gas discharged from the cell assemblies 100A of the first row may flow along the first side wall 521 in the venting direction VD2 parallel to the first horizontal direction (e.g., X-direction) to reach the third side wall 525, and the gas guided to the third side wall 525 may be discharged to the outside of the battery pack 500B through the venting device 540 provided on the third side wall 525. In addition, gas discharged from the cell assemblies 100A of the second row may flow along the second side wall 523 in the venting direction VD2 parallel to the first horizontal direction (e.g., X-direction) to reach the third side wall 525, and the gas guided to the third side wall 525 may be discharged to the outside of the battery pack 500B through the venting device 540 provided on the third side wall 525.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

## Claims

1. A battery pack comprising:
a pack housing; and
a cell assembly disposed in the pack housing,
wherein the cell assembly comprises:
a plurality of battery cells; and
a heat transfer structure comprising a top plate on the plurality of battery cells and a plurality of side plates in contact with the plurality of battery cells,
wherein the plurality of side plates is each fitting-engaged with the top plate.

2. The battery pack of claim 1, wherein the top plate comprises a plurality of insertion holes,
wherein the plurality of side plates each comprises a protrusion inserted into a corresponding insertion hole among the plurality of insertion holes of the top plate.

3. The battery pack of claim 1, wherein the top plate comprises a plurality of unit plates separated from each other,
wherein the plurality of unit plates is each coupled to at least one corresponding side plate among the plurality of side plates.

4. The battery pack of claim 3, wherein the plurality of battery cells is arranged in a first direction,
wherein the plurality of side plates is spaced apart from each other in the first direction,
wherein the plurality of unit plates of the top plate is arranged in the first direction.

5. The battery pack of claim 1, wherein the pack housing comprises a base frame supporting the cell assembly,
wherein the base frame is attached to the plurality of battery cells by a first thermally conductive adhesive layer.

6. The battery pack of claim 5, wherein the base frame comprises a first cooling channel through which a cooling fluid flows.

7. The battery pack of claim 5, wherein the pack housing further comprises an upper cooling structure disposed on the cell assembly,
wherein the upper cooling structure is attached to the top plate of the heat transfer structure by a second thermally conductive adhesive layer.

8. The battery pack of claim 7, wherein the upper cooling structure comprises a second cooling channel through which a cooling fluid flows.

9. The battery pack of claim 1, wherein the heat transfer structure further comprises:
a plurality of cell accommodation spaces separated from each other in a first direction and each extending in a second direction perpendicular to the first direction; and
a plurality of venting channels separated from each other in the first direction and each extending in the second direction,
wherein the plurality of cell accommodation spaces each accommodate a corresponding battery cell among the plurality of battery cells,
wherein the plurality of venting channels is each positioned above a corresponding cell accommodation space among the plurality of cell accommodation spaces and is configured to guide gas in the second direction.

10. The battery pack of claim 9, wherein the plurality of venting channels each extend in the second direction from a first end to a second end,
wherein the cell assembly comprises a blocking plate that closes the first end of each of the plurality of venting channels,
wherein in each of the plurality of venting channels, gas flows in a direction from the first end of each of the plurality of venting channels toward the second end of each of the plurality of venting channels.

11. The battery pack of claim 10, wherein the blocking plate is a portion of the top plate of the heat transfer structure.

12. The battery pack of claim 10, wherein the pack housing comprises:
a first side wall and a second side wall spaced apart in the second direction; and
a third side wall and a fourth side wall spaced apart in the first direction,
wherein the second end of each of the plurality of venting channels faces the first side wall,
wherein a venting device is mounted on the third side wall of the pack housing.

13. The battery pack of claim 1, wherein the plurality of battery cells is arranged in a first direction,
wherein the pack housing further comprises a base frame supporting the cell assembly and a support structure extending in a second direction perpendicular to the first direction on the base frame,
wherein the cell assembly further comprises a fastening frame attached to a battery cell positioned outermost in the first direction among the plurality of battery cells and fastened to the support structure.

14. The battery pack of claim 1, wherein the pack housing comprises:
a base frame supporting the cell assembly and comprising a first cooling channel through which a cooling fluid flows; and
an upper cooling structure disposed on the cell assembly and comprising a second cooling channel through which a cooling fluid flows,
wherein the battery pack further comprises:
a first thermally conductive adhesive layer attaching the base frame to the plurality of battery cells; and
a second thermally conductive adhesive layer attaching the upper cooling structure to the top plate of the heat transfer structure.
